# EUROPÄISCHE PATENTSCHRIFT

(11) **EP 1 318 313 B1**
(45) Veröffentlichungstag und Bekanntmachung des Hinweises auf die Patenterteilung: **25.07.2007**
(21) Anmeldenummer: 02022475.4
(22) Anmeldetag: 04.10.2002
(51) Int. Cl.: F16B 7/02, F01D 25/24

(54) **Verbindungsvorrichtung**
Connection device
Dispositif de connexion

(30) Priorität: 05.12.2001 DE 10159667
(43) Veröffentlichungstag der Anmeldung: 11.06.2003
(73) Patentinhaber: Rolls-Royce Deutschland Ltd & Co KG, 15827 Dahlewitz (DE)
(72) Erfinder: Pichel, Sacha, 12203 Berlin (DE)
(74) Vertreter: Weber, Joachim

(56) Entgegenhaltungen:
- DE-B- 1 263 417
- US-A- 4 457 541
- US-A- 4 557 621

## Beschreibung

Die Erfindung bezieht sich auf eine Verbindungsvorrichtung zur lösbaren Verbindung eines ersten Bauteils und eines zweiten Bauteils. Die Erfindung bezieht sich dabei insbesondere auf eine Verbindungsvorrichtung zum Koppeln oder Verbinden von Wellen oder Ähnlichem, insbesondere auf dem Gebiet der Gasturbinen.

Verbindungsvorrichtungen der beschriebenen Art sind in den unterschiedlichsten Ausgestaltungsformen bekannt. Zunächst kann man Wellen oder ähnliche Teile einstückig miteinander verbinden, beispielsweise verschweißen oder vernieten.

Bei lösbaren Verbindungsvorrichtungen, so wie dies bei der vorliegenden Erfindung der Fall ist, sind Verschraubungen mittels Bolzen bekannt, wobei die Bolzen beispielsweise durch Ringflansche geführt sind. Zusätzlich können die Anlageflächen der Flansche strukturiert ausgebildet sein, so dass bei der Übertragung von Drehmomenten nicht nur Scherkräfte auf die Bolzen wirken, sondern eine formschlüssige Koppelung zwischen den beiden Bauteilen erfolgt.

Bei diesen Ausgestaltungsformen erweist sich sowohl die Herstellung als auch die Montage als sehr aufwendig und damit kostenintensiv. Weiterhin ist es nicht immer möglich, die Bauteile einfach und genau zu zentrieren und zu positionieren.

Ein weiterer Nachteil der bekannten Konstruktionen liegt darin, dass bei der Übertragung von Torsions- und Biegemomenten Schlupf und Spiel auftreten können.

Auch ist eine einfache, wiederholbare Montage der Bauteile bei gleichbleibendem Ergebnis nicht immer gewährleistet.

Es wurde deshalb vorgeschlagen, sogenannte Bogenzahnkupplungen (Curvic) einzusetzen, alternativ hierzu werden auch glatte Flansche mit Übermaß (Spigot) verwendet. Auch konische Ausgestaltungen von Wellenverbindungen sind bereits beschrieben worden.

Die Bogenzahnkupplungen genügen zwar im Wesentlichen den Ansprüchen, sie sind jedoch fertigungstechnisch sehr aufwendig und daher mit sehr hohen Kosten verbunden. Glatte Flansche mit Übermaßpassung (Spigot) können aufgrund der begrenzten Reibung nur für die Übertragung geringer Drehmomente eingesetzt werden. Zudem ist ein erhöhter Montageaufwand erforderlich, um eine gute Zentrierung der erforderlichen Übermaßpassungen zu gewährleisten, insbesondere, da spezielle Werkzeuge, wie Pressen oder Öfen erforderlich sind.

Die bekannten konischen Designs sind zwar selbstzentrierend, sie erzeugen jedoch sowohl axial als auch linear zusätzliche Positionstoleranzen und gewähren zudem kein wiederholbares Montageergebnis. Zudem kann sich die Demontage, bedingt durch die Selbsthemmung im Reibkonus, erschweren.

Bei den Konusverbindungen sind beispielsweise Systeme bekannt, bei welchen eine glatte, zylindrische Welle verwendet wird, auf die ein an dieser zu befestigendes Bauteil aufgesetzt wird. Dieses weist an seiner der Welle zugewandten Ausnehmung oder Bohrung einen Konus auf. Zur Befestigung wird ein Ringkonus zwischen das Bauteil und die Welle gespannt. Die Platz-und Gewichtsparende Verbindung von Wellen, insbesondere Hohlwellen, ist mit diesem System praktisch nicht möglich.

In einer anderen Konstruktion ist vorgeschlagen worden, bei einem der beiden Bauteile eine konusförmige Ausnehmung vorzusehen, in welche ein Konus des anderen Bauteils eingepresst wird. Hierbei können sich Probleme hinsichtlich der Zentrierung und der axialen Ausrichtung ergeben. In Abhängigkeit von Fertigungsungenauigkeiten kann es weiterhin problematisch sein, eine exakte und reproduzierbare Montage sicherzustellen.

Die DE-A 1 263 417 zeigt eine Steckmuffenverbindung, bei welcher ein erstes Bauteil ein zylindrische äußere Anlagefläche aufweist, auf welche, wie bei einer Steckmuffe üblich, ein zweites, rohrförmiges Bauteil aufgesteckt wird, so dass eine radial nach innen weisende zylindrische Fläche des zweiten Bauteils auf einer radial nach außen liegenden Fläche des ersten Bauteils aufliegt. Eine Zentrierung und/oder Abdichtung erfolgt durch einander zugewandte konische Flächen, wobei das erste Bauteil eine nach außen weisende konische Fläche und das zweite Bauteil eine radial nach innen weisende konische Fläche aufweist. Die Verspannung erfolgt mittels eines außen liegenden Spannrings, welcher lediglich Axialkräfte aufbringt.

Aus der US-A-4 557 621 ist eine Klemmeinrichtung vorbekannt, bei welcher ein Bauelement auf einer zylindrischen Welle geklemmt werden soll. Hierzu weist das Bauelement eine zylindrische Ausnehmung auf. In den zwischen der Ausnehmung und der Welle gebildeten Ringspalt werden zwei Konuselemente eingefügt und gegeneinander verspannt.

Der Erfindung liegt die Aufgabe zugrunde, eine Verbindungsvorrichtung zur lösbaren Verbindung von Bauteilen, insbesondere von Wellen, zu schaffen, welche bei einfachem Aufbau, kostengünstiger Herstellbarkeit und einfacher Montage eine präzise Zuordnung der Bauteile sowie eine problemlose Demontage ermöglichen.

Erfindungsgemäß wird die Aufgabe durch die Merkmale des Hauptanspruchs gelöst, die Unteransprüche zeigen weitere vorteilhafte Ausgestaltungen der Erfindung.

Erfindungsgemäß ist somit vorgesehen, dass ein erstes Bauteil eine im Wesentlichen zylindrische, stirnseitige Ausnehmung aufweist, in welche ein Ansatz eines zweiten Bauteils einsetzbar ist. Dieser Ansatz ist, zumindest hinsichtlich seiner Funktionsflächen, ebenfalls zylindrisch ausgebildet. Die beiden Bauteile können somit präzise und passgenau aneinander montiert werden. Es ergibt sich somit der Vorteil, dass die Zuordnung der Bauteile ähnlich wie bei einem glatten Flansch erfolgt. Durch entsprechende Auswahl des Spiels zwischen dem zylindrischen Bereich der Ausnehmung und dem zylindrischen Bereich des Ansatzes können die gewünschten Toleranzen vorgewählt werden. Insbesondere können auch lose Passungstoleranzen gewählt werden, da sich diese beim Verspannen setzen. Somit ist sowohl eine hervorragende axiale als auch radiale Ausrichtung der beiden Bauteile gewährleistet. Montage und Demontage werden dadurch wesentlich einfacher.

Erfindungsgemäß ist weiterhin vorgesehen, dass zumindest ein konischer Spannkörper vorgesehen ist, welcher zwischen das erste und das zweite Bauteil eingebracht wird, um diese beiden Bauteile gegeneinander zu verspannen. Hierzu weist das erste Bauteil bevorzugterweise an einer der zylindrischen Seite der Ausnehmung zugewandten Seite eine konische Fläche auf, die mit einer entsprechenden konischen Fläche des zweiten Bauteils korrespondiert.

Erfindungsgemäß wird somit ein Überwurfkonus verwendet, der beim Vorspannen (Anziehen der Befestigungsschrauben) gegen die konischen Anlageflächen des ersten Bauteils und des zweiten Bauteils gepresst wird. Hierdurch erfolgt nicht nur eine Fixierung der beiden Bauteile, vielmehr wird auch die Kontur des Ansatzes des zweiten Bauteils gegen die Kontur der Ausnehmung des ersten Bauteils gepresst.

Erfindungsgemäß erfolgt somit die Positionierung der beiden Bauteile über die geraden Anlageflächen der Ausnehmung und des Ansatzes, während die Kraftübertragung über die Reibung im konischen Spannkörper sowie die durch das Anziehen des Spannkörpers hervorgerufene Presspassung erfolgt.

Die erfindungsgemäße Verbindungsvorrichtung ist somit selbstzentrierend. Sie benötigt keine weiteren konstruktiven Merkmale, um eine axiale oder lineare Passung zu gewährleisten, vielmehr ergeben sich diese durch die gewählte Grundkonstruktion der erfindungsgemäßen Verbindungsvorrichtung.

Ein weiterer, wesentlicher Vorteil besteht darin, dass sowohl die Montage als auch die Demontage einfach und ohne aufwendige Werkzeuge durchzuführen sind. Insbesondere ist das Montageergebnis beliebig oft gut wiederholbar. Hierbei spielt insbesondere eine Rolle, dass geringfügigste Fertigungstoleranzen oder Verschleiß im Bereich des konischen Spannkörpers die Positionierung der beiden Bauteile zueinander nicht beeinflussen und zudem keine Beeinträchtigung der Drehmomentübertragung mit sich bringen.

Die erfindungsgemäße Verbindungsvorrichtung ist zudem kostengünstig herzustellen und weist eine hohe Lebensdauer auf.

Abhängig von der Konstruktion des konischen Spannkörpers sowie der konischen Flächen des ersten Bauteils und des zweiten Bauteils ist es möglich, einen selbsthemmenden Konus zu schaffen, der hohe Drehmomente übertragen kann, wobei die Drehmomentübertragung unabhängig von der Anpresskraft der Schrauben ist, welche beispielsweise zeitlich oder bei entsprechenden Temperaturgradienten abnehmen kann.

In einer besonders günstigen Ausgestaltung der Erfindung ist vorgesehen, dass das erste Bauteil und das zweite Bauteil jeweils rohrförmig ausgebildet sind. Durch diese Ausgestaltung ist es möglich, die zum Spannen des konischen Spannkörpers verwendeten Schrauben oder Gewindebolzen am Innenbereich der Bauteile anzuordnen, so dass der Außenumfang durch die Verbindungsvorrichtung nicht oder nicht wesentlich beeinträchtigt wird.

Erfindungsgemäß kann der Spannkörper entweder ringförmig ausgebildet sein (geschlossener Ring), oder als Ringsegment ausgestaltet werden. Es können somit mehrere Ringsegmente eingesetzt werden. Dies kann insbesondere bei erschwerten Montagebedingungen oder bei einem eingeschränkten Platzbedarf vorteilhaft sein.

Besonders günstig ist es, wenn der Ansatz des zweiten Bauteils und die Ausnehmung des ersten Bauteils jeweils Zentrierflächen aufweisen.

Die Herstellungskosten und die Montage vereinfachen sich insbesondere dadurch, dass das erste Bauteil und das zweite Bauteil mittels Schrauben oder Schraubenbolzen gegeneinander verspannbar sind. Hierbei kann bevorzugterweise ein Flansch des ersten Bauteils sowie der Spannkörpers jeweils mit Ausnehmungen zur Durchführung der Schrauben oder Schraubenbolzen versehen sein. In Abhängigkeit von der Montagerichtung kann in dem Flansch oder in dem Spannkörper jeweils eine Gewindeausnehmung vorgesehen sein. Es ist selbstverständlich auch möglich, die Schrauben oder Gewindebolzen mittels zusätzlicher Muttern zu spannen.

Im Folgenden wird die Erfindung anhand eines Ausführungsbeispiels in Verbindung mit der Zeichnung beschrieben. Dabei zeigt:
- Fig. 1: eine perspektivische Explosionsansicht der erfindungsgemäßen Verbindungsvorrichtung, teils im Schnitt, und
- Fig. 2: eine Teil-Schnittansicht der in Fig. 1 gezeigten Verbindungsvorrichtung in montiertem Zustand.

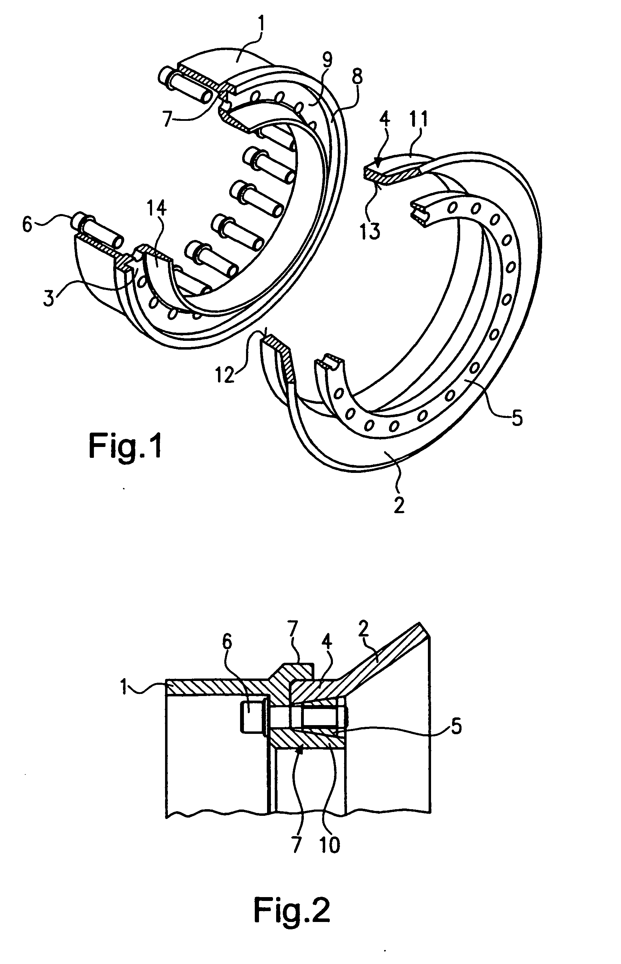

Zur Verdeutlichung der Darstellung zeigen die Fig. 1 und 2 jeweils nur einen Teilbereich der zu verbindenden Bauteile, diese können beispielsweise in Form von Hohlwellen ausgebildet sein.

Bei dem Ausführungsbeispiel ist zunächst ein erstes Bauteil 1 gezeigt, welches als Hohlwelle oder als zylindrisches Bauelement ausgebildet ist und stirnseitig eine Ausnehmung 3 aufweist, die in einem einstückig mit dem ersten Bauteil 1 verbundenen Flansch 7 ausgebildet ist. Die Ausnehmung weist eine radiale Positionierfläche 8 sowie eine axiale Positionierfläche 9 auf. Wie insbesondere in Fig. 2 gezeigt, ist an dem Flansch 7 weiterhin ein innenliegender Schenkel 10 einstückig ausgebildet, welcher mit einer konischen Fläche versehen ist.

Das zweite Bauteil 2 ist mit einem Ansatz 4 versehen, welcher ringförmig ausgebildet ist. Der Ansatz 4 ist mit einer radialen Positionierfläche 11 und einer axialen Positionierfläche 12 versehen.

Die radiale Positionierfläche 11 des zweiten Bauteils 2 sowie die radiale Positionierfläche 8 des ersten Bauteils 1 sind jeweils zylindrisch ausgebildet.

An der der radialen Positionierfläche 11 gegenüberliegenden Seite ist der Ansatz mit einer Konusfläche 13 versehen. Diese korrespondiert mit der Konusfläche 14 des Schenkels 10 des ersten Bauteils 1.

Zwischen die beiden Konusflächen 13, 14 ist ein doppelkonusförmig ausgebildeter Spannkörper 5 einführbar (siehe in Fig. 2), welcher mittels Schrauben oder Gewindebolzen 6 verspannbar ist. Der Spannkörper 5 sichert somit die axiale Zuordnung, er überträgt entsprechende Reibungskräfte und führt zu einem Verpressen der beiden radialen Positionierflächen 8, 11 gegeneinander.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten.

### Bezugszeichenliste:

- 1: Erstes Bauteil
- 2: Zweites Bauteil
- 3: Ausnehmung
- 4: Ansatz
- 5: Spannkörper
- 6: Schraube
- 7: Flansch
- 8: Radiale Positionierfläche
- 9: Axiale Positionierfläche
- 10: Schenkel
- 11: Radiale Positionierfläche
- 12: Axiale Positionierfläche
- 13: Konusfläche
- 14: Konusfläche

## Patentansprüche

1. Verbindungsvorrichtung zur lösbaren Verbindung eines ersten Bauteils (1) und eines zweiten Bauteils (2), bei welcher das erste Bauteil (1) eine im Wesentlichen zylindrische, stirnseitige Ausnehmung (3) aufweist, bei welcher das zweite Bauteil mit einem im Wesentlichen zylindrischen Ansatz (4) versehen ist, welcher passend in die Ausnehmung (3) einführbar ist, wobei der Ansatz (4) des zweiten Bauteils (2) an seiner der zylindrischen Seite gegenüberliegenden Seite konisch ausgebildet ist, wobei das erste Bauteil (1) an einer der zylindrischen Seite der Ausnehmung (3) zugewandten Seite mit einer konischen Fläche versehen ist, sowie mit einem konischen Spannkörper (5), welcher mit dem Ansatz (4) des zweiten Bauteils (2) in die Ausnehmung (3) des ersten Bauteils (1) einführbar und gegen das erste Bauteil (1) verspannbar ist.

2. Verbindungsvorrichtung nach Anspruch 1, **dadurch gekennzeichnet, dass** das erste Bauteil (1) und das zweite Bauteil (2) jeweils rohrförmig ausgebildet sind.

3. Verbindungsvorrichtung nach einem der Ansprüche 1 oder 2, **dadurch gekennzeichnet, dass** der Spannkörper (5) ringförmig ausgebildet ist.

4. Verbindungsvorrichtung nach einem der Ansprüche 1 oder 2, **dadurch gekennzeichnet, dass** der Spannkörper (5) als Ringsegment ausgebildet ist.

5. Verbindungsvorrichtung nach einem der Ansprüche 1 bis 4, **dadurch gekennzeichnet, dass** der Ansatz (4) des zweiten Bauteils (2) und die Ausnehmung (3) des ersten Bauteils (1) jeweils Zentrierflächen aufweisen.

6. Verbindungsvorrichtung nach einem der Ansprüche 1 bis 5, **dadurch gekennzeichnet, dass** das erste Bauteil (1) und das zweite Bauteil (2) mittels Schrauben (6) verspannbar sind.

7. Verbindungsvorrichtung nach Anspruch 6, **dadurch gekennzeichnet, dass** ein Flansch (7) des ersten Bauteils (1) sowie der Spannkörper (5) jeweils mit Ausnehmungen zur Durchführung der Schrauben (6) versehen sind.

8. Verbindungsvorrichtung nach einem der Ansprüche 1 bis 7, **dadurch gekennzeichnet, dass** das erste Bauteil (1) und das zweite Bauteil (2) als Hohlwellen ausgebildet sind.

9. Verwendung der Verbindungsvorrichtung nach einem Ansprüche 1 bis 8 zur lösbaren Kopplung von Wellenbereichen einer Gasturbine.

## Claims

1. Assembly fixture for the separable connection of a first component (1) and a second component (2), with the first component (1) having an essentially cylindrical end-face recess (3), with the second component (2) having an essentially cylindrical protrusion (4) which fits into the recess (3), with the protrusion (4) of the second component (2) being conical at the side opposite the cylindrical side, and with the first component (1) being provided with a conical face at a side facing the cylindrical side of the recess (3) and with a conical clamping body (5), which, together with the protrusion (4) of the second component (2), can be inserted into the recess (3) of the first component (1) and clamped against the first component (1).

2. Assembly fixture in accordance with Claim 1, **characterized in that** both the first component (1) and the second component (2) are tubular each.

3. Assembly fixture in accordance with Claim 1 or 2, **characterized in that** the clamping body (5) is annular.

4. Assembly fixture in accordance with Claim 1 or 2, **characterized in that** the clamping body (5) is a segmented ring.

5. Assembly fixture in accordance with one of the Claims 1 to 4, **characterized in that** both the protrusion (4) of the second component (2) and the recess (3) of the first component (1) feature centering faces.

6. Assembly fixture in accordance with one of the Claims 1 to 5, **characterized in that** the first component (1) and the second component (2) can be clamped together by means of bolts (6).

7. Assembly fixture in accordance with Claim 6, **characterized in that** a flange (7) of the first component (1) and the clamping body (5) are each provided with openings for the passage of the bolts (6).

8. Assembly fixture in accordance with one of the Claims 1 to 7, **characterized in that** the first component (1) and the second component (2) are hollow shafts.

9. Use of the assembly fixture in accordance with one of the Claims 1 to 8 for the separable coupling of shaft sections of a gas turbine.

## Revendications

1. Dispositif d'assemblage destiné à assembler de façon démontable un premier élément (1) et un second élément (2), sachant que le premier élément (1) présente un évidement (3) frontal et cylindrique pour l'essentiel, que le second élément est pourvu d'un épaulement (4) cylindrique pour l'essentiel, qui peut être inséré dans l'évidement (3) avec précision d'ajustage, que l'épaulement (4) du second élément (2) a une forme conique sur la face opposée à la surface cylindrique, et que le premier élément (1) est pourvu d'une portée conique sur une face tournée vers la surface cylindrique de l'évidement (3), et d'une pièce de fixation (5) conique, qui peut être insérée avec l'épaulement (4) du second élément (2) dans l'évidement (3) du premier élément (1) et serrée contre le premier élément (1).

2. Dispositif d'assemblage selon la revendication n° 1, **caractérisé en ce que** le premier élément (1) et le second élément (2) ont chacun une forme tubulaire.

3. Dispositif d'assemblage selon la revendication n° 1 ou 2, **caractérisé en ce que** la pièce de fixation (5) a une forme annulaire.

4. Dispositif d'assemblage selon la revendication n° 1 ou 2, **caractérisé en ce que** la pièce de fixation (5) a la forme d'un anneau segmenté.

5. Dispositif d'assemblage selon une des revendications n° 1 à 4, **caractérisé en ce que** l'épaulement (4) du second élément (2) et l'évidement (3) du premier élément (1) présentent chacun des surfaces de centrage.

6. Dispositif d'assemblage selon une des revendications n° 1 à 5, **caractérisé en ce que** le premier élément (1) et le second élément (2) peuvent être fixés l'un à l'autre au moyen de vis (6).

7. Dispositif d'assemblage selon la revendication n° 6, **caractérisé en ce qu'**une bride (7) du premier élément (1) et la pièce de fixation (5) sont chacune dotées d'orifices permettant le passage des vis (6).

8. Dispositif d'assemblage selon une des revendications n° 1 à 7, **caractérisé en ce que** le premier élément (1) et le second élément (2) ont la forme d'arbres creux.

9. Utilisation du dispositif d'assemblage selon une des revendications n° 1 à 8 afin de coupler de façon démontable des zones d'arbres d'une turbine à gaz.
